# EUROPÄISCHE PATENTSCHRIFT

(11) **EP 1 366 110 B1**
(45) Veröffentlichungstag und Bekanntmachung des Hinweises auf die Patenterteilung: **26.07.2006**
(21) Anmeldenummer: 02701251.7
(22) Anmeldetag: 11.01.2002
(51) Int. Cl.: C08J 9/00, C08J 9/12, C08J 9/14, C08J 9/20, C08L 25/04

(54) **KOHLENSTOFFPARTIKEL ENTHALTENDE EXPANDIERBARE STYROLPOLYMERISATE**
EXPANDABLE STYRENE POLYMERS CONTAINING CARBON PARTICLES
POLYMERES STYRENIQUES EXPANSIBLES CONTENANT DES PARTICULES DE CARBONE

(30) Priorität: 13.01.2001 DE 10101432
(43) Veröffentlichungstag der Anmeldung: 03.12.2003
(73) Patentinhaber: BASF Aktiengesellschaft, 67056 Ludwigshafen (DE)
(72) Erfinder: GLÜCK, Guiscard, Tokyo 141-0022 (JP)
(86) Internationale Anmeldenummer: PCT/EP2002/000212
(87) Internationale Veröffentlichungsnummer: WO 2002/055594

(56) Entgegenhaltungen:
- EP-A- 0 373 441
- WO-A-98/51735

## Beschreibung

Die Erfindung betrifft teilchenförmige, Kohlenstoffpartikel enthaltende expandierbare Styrolpolymerisate (EPS-Partikel)mit niedrigem Pentangehalt.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten EPS-Partikeln und das nachfolgende Verschweißen der so hergestellten Schaumpartikel zu Formkörpern. Ein wesentliches Einsatzgebiet ist die Wärmedämmung im Bauwesen.

Die zur Wärmedämmung eingesetzten Schaumstoffplatten aus EPS-Partikeln haben zumeist Dichten von mindestens 30 g/l, da bei diesen Dichten die Wärmeleitfähigkeit des Polystyrolpartikelschaums ein Minimum aufweist. Aus Gründen der Materialeinsparung ist es wünschenswert, Schaumstoffplatten mit geringeren Dichten, insbesondere ≤ 15 g/l, zur Wärmeisolation einzusetzen. Die Herstellung derartiger Schaumstoffe ist technisch kein Problem. Schaumstoffplatten mit geringer Dichte weisen jedoch eine drastisch verschlechterte Wärmedämmfähigkeit auf, so daß sie die Anforderungen der wärmeleitklasse 035 (DIN 18 164, Teil 1) nicht erfüllen.

Nun ist es bekannt, die Wärmeleitfähigkeit von Schaumstoffen durch Einbau von athermanen Materialien, wie Ruß, Metalloxiden, Metallpulver oder Farbstoffpigmenten, zu vermindern. Die Patentanmeldungen WO 98/51734, 98/51735, 99/16817 und EP-A 915 127 betreffen Graphitpartikel enthaltende EPS-Partikel und daraus hergestellte Schaumstoffe mit verminderter Wärmeleitfähigkeit.

Handelsübliche EPS-Partikel enthalten gewöhnlich als Treibmittel Pentan in Mengen von 6 bis 7 Gew.-%, dies ist auch in den Beispielen der genannten Druckschriften der Fall. Aus Umweltschutzgründen ist man jedoch bestrebt, den Gehalt an Kohlenwasserstoff-Treibmitteln möglichst weit zu erniedrigen. So lehrt die US-A 5,112,875, daß EPS-Partikel mit 2 bis 5,5 Gew.-% Kohlenwasserstoff-Treibmitteln hergestellt werden können, wenn das Polystyrol eine ganz spezielle Molekulargewichtsverteilung aufweist. Bevorzugt bei derartigen "Low-Pentane"-Produkten ist ein Pentangehalt von 3 bis 4 Gew.-%. Derartige EPS-Partikel haben jedoch den Nachteil geringer Expandierbarkeit, d.h., es gelingt nicht, in einem Expandierschritt Schüttdichten unterhalb von etwa 20 g/l zu erreichen. Hierzu müssen entweder teure Regler, z.B. dimeres α-Methylstyrol, oder Weichmacher, z.B. höhere Kohlenwasserstoffe zugesetzt werden, oder es müssen aufwendige Schäumtechniken, z.B. Vorschäumen unter Druck oder mehrmaliges Schäumen angewandt werden.

Die US-A 5,096,931 beschreibt EPS, welches als Treibmittel ein Gemisch aus Wasser und einem C₃- bis C₆-Kohlenwasserstoff sowie einem Superabsorber, insbesondere teilvernetzter Polyacrylsäure, enthält. Diese hat aber den Nachteil, daß sie bei der Suspensionspolymerisation aufgrund des niedrigen pH-Werts zu Störungen führt und außerdem zu Verzweigungen der Polystyrolkette Anlass gibt.

Die WO 99/48957 beschreibt ein Verfahren zur Herstellung von Wasser als einzigem Treibmittel enthaltendem Polystyrol durch Polymerisation von Styrol in wässriger Suspension in Gegenwart von Ruß oder Graphit, die als Hilfsmittel für das Emulgieren von Wasser in feiner Verteilung in den suspendierten Styroltröpfchen wirken. Die entstandenen EPS-Partikel können aber nicht in üblichen Vorschäumapparaturen mit heißem Wasserdampf geschäumt werden.

Die WO OO/15703 beschreibt leicht angeschäumte, poröse EPS-Partikel mit einer Schüttdichte von 200 bis 600 g/l, die ein Nucleierungsmittel, höchstens 2 Gew.-% eines organischen Treibmittels, z. B. Pentan, und höchstens 3 Gew.-% Wasser, jeweils bezogen auf das Styrolpolymerisat, enthalten. Die porösen Partikel müssen in einem separaten Verfahrensschritt durch Anschäumen hergestellt werden.

Der Erfindung lag also die Aufgabe zugrunde, EPS-Partikel mit verhältnismäßig niedrigem Pentangehalt aber guter Expandierbarkeit bereitzustellen, die auf einfache Weise zu Schaumstoffen mit niedriger Wärmeleitfähigkeit verarbeitet werden können.

Es wurde nun gefunden, daß diese Aufgabe gelöst ist bei Graphit- oder Ruß-Partikel enthaltendem EPS, das als Treibmittel neben 2,2 bis 6 Gew.-% Pentan noch 1 bis 10 Gew.-% Wasser enthält. Überraschenderweise neigt derartiges, Graphit- oder Ruß-Partikel enthaltendes EPS im Gegensatz zu gewöhnlichem EPS, auch wenn es einen Innenwassergehalt von bis zu 4 Gew.-% aufweist, nicht zu Ausschwitzen von Wasser bei der Lagerung.

Bevorzugt enthalten die erfindungsgemäßen EPS-Partikel 2,5 bis 5,0 Gew.-%, insbesondere 3,0 bis 4,0 Gew.-% Pentan und mehr als 3 bis 8, insbesondere 3,5 bis 6 Gew.-% Wasser.

Die EPS-Partikel sind praktisch porenfrei und weisen eine Schüttdichte von mehr als 600 g/l, vorzugsweise von mehr als 650 g/l und insbesondere von mehr als 700 g/l auf.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol. Auch Blends aus Polystyrol und anderen Polymeren, insbesondere mit Kautschuk und Polyphenylenether sind möglich.

Die Styrolpolymerisate können wegen der guten Expandierbarkeit der EPS-Partikel eine relativ hohe Viskositätszahl im Bereich von 75 bis 100 ml·g-1 aufweisen, ohne daß Weichmacher zugesetzt werden müssen, die zu unerwünschten Emissionen führen können.

Die Styrolpolymerisate können die üblichen und bekannten Hilfsmittel und Zusatzstoffe enthalten, beispielsweise Flammschutzmittel, Keimbildner, UV-Stabilisatoren und Antioxidantien. Vorzugsweise enthalten die Styrolpolymerisate keine vernetzten oder verzweigten, Carboxygruppen tragenden Polymeren, wie Polyacrylsäure.

Geeignete Zusatzstoffe zur Erniedrigung der Wärmeleitfähigkeit sind Kohlenstoffpartikel, wie Ruß und Graphit. Geeignet sind alle üblichen Rußsorten, wobei Flammruß mit einer Partikelgröße von 80 bis 120 nm bevorzugt ist. Ruß wird vorzugsweise in Mengen von 2 bis 10 Gew.-% eingesetzt. Besonders gut geeignet ist aber Graphit, wobei eine mittlere Partikelgröße von 0,5 bis 200 µm, vorzugsweise von 1 bis 25 µm, und insbesondere von 2 bis 20 µm, ein Schüttgewicht von 100 bis 500 g/l und eine spezifische Oberfläche von 5 bis 20 m²/g bevorzugt sind. Es hat sich gezeigt, daß ein Zusammenhang besteht zwischen der mittleren Partikelgröße des Graphits und der Menge an Wasser, das in die EPS-Partikel eingebracht wird. Bei einer mittleren Partikelgröße von 30 µm werden beispielsweise etwa 2 % Wasser eingebracht, bei einer Partikelgröße von 10 µm sind es etwa 4 % und bei einer Partikelgröße von 4 µm etwa 8 %. Es kann Naturgraphit oder gemahlener synthetischer Graphit eingesetzt werden. Die Graphitpartikel sind im Styrolpolymerisat in Mengen von 0,1 bis 25 Gew.-%, insbesondere von 0,5 bis 8 Gew.-% enthalten.

In einer bevorzugten Ausführungsform der Erfindung enthalten die expandierbaren Styrolpolymerisaten Flammschutzmittel, insbesondere solche auf Basis organischer Bromverbindungen. Die organischen Bromverbindungen sollen einen Bromgehalt von ≥ 70 Gew.-% aufweisen. Insbesondere geeignet sind aliphatische, cycloaliphatische und aromatische Bromverbindungen, wie Hexabromcyclododecan, Pentabrommonochlorcyclohexan, Pentabromphenylallylether.

Die Wirkung der bromhaltigen Flammschutzmittel wird durch Zusatz von C-C- oder O-O-labilen organischen Verbindungen erheblich verbessert. Beispiele geeigneter Flammschutzsynergisten sind Dicumyl und Dicumylperoxid. Eine bevorzugte Kombination besteht aus 0,6 bis 5 Gew.-% organischer Bromverbindung und 0,1 bis 1,0 Gew.-% der C-C- oder O-O-labilen organischen Verbindung.

Die erfindungsgemäßen EPS-Partikel werden zweckmäßigerweise hergestellt durch übliche Suspensionspolymerisation von Styrol, gegebenenfalls zusammen mit bis zu 20 % seines Gewichts an Comonomeren, in Gegenwart von 0,1 bis 25 Gew.-%, vorzugsweise von 0,5 bis 8 Gew.-% Graphit- oder Ruß-Partikel und von 2,5 bis 8, vorzugsweise von 3 bis 5,5 Gew.-% Pentan, jeweils bezogen auf die Monomeren. Das Treibmittel kann dabei vor oder während der Suspensionspolymerisation zugesetzt werden.

Die Suspensionspolymerisation wird vorzugsweise - wie in WO 99/16817 beschrieben - in Gegenwart von zwei bei verschiedenen Temperaturen zerfallenden Peroxiden durchgeführt. Das bei der niedrigeren Temperatur zerfallende Peroxid A sollte eine Halbwertszeit von 1 Stunde bei 80°C bis 100°C, vorzugsweise von 85°C bis 95°C aufweisen; das bei der höheren Temperatur zerfallende Peroxid B sollte eine Halbwertszeit von 1 Stunde bei 110°C bis 140°C, vorzugsweise bei 120 bis 135°C aufweisen. Bevorzugt sind solche Peroxide A, die beim Zerfall Alkoxyradikale bilden. Beispielsweise genannt seien tert.-Butylperoxy-2-ethylhexanoat, Amylperoxy-2-ethylhexanoat, tert. Butylperoxydiethylacetat sowie tert. Butylperoxyisobutanoat. Grundsätzlich ist auch die Polymerisation mit Dibenzoylperoxid möglich.

Als Peroxid B können alle üblichen, bei den genannten hohen Temperaturen zerfallenden Peroxide eingesetzt werden. Bevorzugt sind solche, die frei von Benzoylgruppen sind, wenn das erhaltene EPS benzolfrei sein soll. Bevorzugte Peroxide B sind daher Dicumylperoxid sowie aliphatische oder cycloaliphatische Perketale oder Monoperoxycarbonate. Daneben kann z.B. auch Di-tert.-Amylperoxid eingesetzt werden.

Die Suspensionspolymerisation wird zweckmäßigerweise in zwei Temperaturstufen durchgeführt. Dabei wird zunächst die Suspension innerhalb von maximal 2 Stunden auf 90°C bis 100°C erhitzt, wobei das Peroxid A zerfällt und die Polymerisation einleitet. Danach läßt man die Reaktionstemperatur, vorzugsweise um 8 bis 17°C pro Stunde, ansteigen bis auf 120 bis 140°C und hält bei dieser Temperatur so lange bis der Restmonomerengehalt auf weniger als 0,1 % abgesunken ist. Bei dieser Temperatur zerfällt das Peroxid B. Mit dieser Verfahrensweise ist man in der Lage, EPS mit geringen Restmonomergehalten zu erzeugen.

Es hat sich gezeigt, daß es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 3 bis 20 Gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat können eingesetzt werden. Eine andere Möglichkeit besteht darin, daß man Styrol in Substanz bis zu einem Umsatz von 0,5 bis 70 % vorpolymerisiert und das Vorpolymerisat zusammen mit den Ruß- bzw. Graphitpartikeln in der wässrigen Phase suspendiert und auspolymerisiert.

Bei der Suspensionspolymerisation entstehen perlförmige, im wesentlichen runde Teilchen mit einem mittleren Durchmesser im Bereich von 0,2 bis 2 mm, in denen die Ruß- bzw. Graphitpartikel homogen verteilt sind. Sie werden auf übliche Weise gewaschen und von oberflächlich anhaftendem Wasser befreit.

Es hat sich gezeigt, daß EPS-Partikel mit dem erfindungsgemäßen Gehalt von 1 bis 10 Gew.-% Wasser dann erhalten werden, wenn man mindestens eine, möglichst mehrere der folgenden Maßnahmen anwendet:
- Bei der Polymerisation sollten nur geringe Scherkräfte wirken, d.h., es sollte bei geringem Leistungseintrag des Rührers verhältnismäßig langsam gerührt werden.
- Die Suspension sollte schnell, vorzugsweise innerhalb von 30 bis 120 min auf 90 bis 100°C aufgeheizt werden.
- Die Endtemperatur sollte verhältnismäßig hoch liegen, vorzugsweise oberhalb von 120°C, insbesondere oberhalb von 130°C.
- Die Trocknung sollte verhältnismäßig rasch vor sich gehen.

Bevorzugt werden die EPS-Partikel nach dem Waschen blitzgetrocknet, d.h. weniger als 1 sec lang einem Luftstrom von 50 bis 100°C ausgesetzt, um anhaftendes Oberflächenwasser zu entfernen. Falls der Innenwassergehalt über etwa 4 Gew.-% liegt, sollten die EPS-Partikel mit einer Oberflächen-Beschichtung versehen werden, die ein hohes Wasseraufnahmevermögen hat, z.B. mit Natriumpolyacrylat. Bei zu hohem Innenwassergehalt besteht die Gefahr, daß bei der Lagerung auf unerwünschte Weise Wasser ausschwitzt.

Bei längerer Lagerung, insbesondere an freier Atmosphäre, kann ein Teil des Pentans aus den EPS-Partikeln entweichen. Wesentlich ist, daß beim Schäumprozeß der Pentangehalt mindestens 2,2 Gew.-% beträgt.

Die EPS-Partikel können mit üblichen Beschichtungsmitteln, z.B. Metallstearaten, Glycerinestern und feinteiligen Silicaten beschichtet werden.

Ein weiterer Gegenstand der Erfindung ist ein Verfahren zur Herstellung von Styrolpolymerisat-Schaumpartikeln durch Verschäumen der erfindungsgemäßen EPS-Partikel, bei dem man diese in einem einzigen Schritt auf eine Schüttdichte unterhalb von 200 g/l, vorzugsweise unterhalb von 150 g/l, und in einem oder mehreren weiteren Schritten auf eine Schüttdichte unterhalb von 50 g/l, vorzugsweise unterhalb von 40 g/l verschäumt. Dies geschieht zumeist durch Erwärmen der EPS-Partikel und Wasserdampf in sogenannten Vorschäumern.

Die so hergestellten vorgeschäumten Partikel können zu Polystyrolschaumstoffen mit Dichten von 5 bis 35 g/l, bevorzugt von 8 bis 25 g/l und insbesondere von 10 bis 15 g/l, verarbeitet werden. Hierzu werden die vorgeschäumten Partikel in nicht gasdicht schließende Formen gebracht, mit Wasserdampf beaufschlagt und zu Formkörpern verschweißt. Nach Abkühlen können die Formteile entnommen werden.

### Beispiel 1

In 419 kg Styrol werden 21 kg Polystyrol (PS 158 K der BASF) gelöst und 8,5 kg pulverförmiges Graphit (mittlere Teilchengröße 30 µm) (Graphitwerk Kropfmühl AG, AP) homogen suspendiert unter Beimischung von 0,34 kg tert.Butylperoxy-2-ethylhexanoat, 2,1 kg Dicumylperoxid, sowie 2,9 kg Hexabromcyclododecan. Die organische Phase wird in 485 1 vollentsalztes Wasser in einem druckfesten 1 m³ Rührkessel eingebracht. Die wäßrige Phase enthält 1,16 kg Natriumpyrophosphat und 2,15 kg Bittersalz. Das Reaktionsgemisch wird unter schwachem Rühren innerhalb von 75 min auf 95°C erhitzt. Anschließend wird innerhalb von 4 h auf 132°C erhitzt, wobei nach 2 h 5,8 kg Emulgator K 30/40 (Bayer AG) und nach circa 2,5 h 25 kg Pentan zugegeben werden. Schließlich wird bei einer Temperatur von 137°C auspolymerisiert. Die EPS-Partikel werden gewaschen und blitzgetrocknet. Die Viskositätszahl des Polystyrols betrug 83 ml·g⁻¹.

Eine Perlfraktion von 1,6 bis 2,5 mm wurde ausgesiebt, deren Pentan- und Innenwassergehalt wurde bestimmt. Dann wurden die Partikel mit Wasserdampf 3 min lang geschäumt und die Schüttdichte gemessen. Die Schaumpartikel wurden schließlich in einem üblichen Formteilautomaten verschweißt, die Zeit bis zum Abbau des Drucks, der nach dem Dampfstoß zum Verschweißen der Partikel sich im Formteil gegen die Form aufbaut (Entformzeit) wurde gemessen.

### Vergleichsbeispiel 2V

Beispiel 1 wurde wiederholt, wobei aber die EPS-Partikel 8 h lang mit 50°C heißer Luft getrocknet wurden.

### Beispiel 3

Beispiels 1 wurde wiederholt, dabei aber Graphit einer mittleren Teilchengröße von 10 µm eingesetzt und nur 17,5 kg Pentan zugesetzt.

Tabelle 1 zeigt die Ergebnisse

**Tabelle**

| | | | | |
|---|---|---|---|---|
| Bsp. | Pentangehalt Gew.-% | Wassergehalt Gew.-% | Schüttdichte g/l | Entformzeit sec |
| 1 | 4,5 | 1,86 | 16,1 | 57 |
| 2V | 4,5 | 0,19 | 21,3 | 87 |
| 3 | 3,5 | 4,50 | 18,9 | 51 |

## Patentansprüche

1. Teilchenförmige, expandierbare Styrolpolymerisate (EPS-Partikel) mit einer Schüttdichte oberhalb von 600 g/l, die 0,1 bis 25 Gew.-% Graphit- oder Ruß-Partikel sowie ein flüchtiges Treibmittel enthalten, **dadurch gekennzeichnet, daß** das Treibmittel ein Gemisch ist aus
2,2 bis 6 Gew.-% Pentan und
1 bis 10 Gew.-% Wasser,
jeweils bezogen auf die EPS-Partikel.

2. EPS-Partikel nach Anspruch 1, **dadurch gekennzeichnet, daß** sie eine Schüttdichte oberhalb von 650 g/l aufweisen.

3. EPS-Partikel nach Anspruch 1 oder 2, **dadurch gekennzeichnet, daß** sie
2,5 bis 5,0 Gew.-% Pentan und
mehr als 3 bis 8 Gew.-% Wasser enthalten.

4. EPS-Partikel nach Anspruch 1 oder 2, **dadurch gekennzeichnet, dass** sie
3,0 bis 4,0 Gew.-% Pentan und
3,5 bis 6 Gew.-% Wasser enthalten.

5. EPS-Partikel nach einem der Ansprüche 1 bis 4, **dadurch gekennzeichnet, daß** sie 0,5 bis 8 Gew.-% Graphit mit einer mittleren Teilchengröße von 1 bis 25 µm enthalten.

6. EPS-Partikel nach einem der Ansprüche 1 bis 4, **dadurch gekennzeichnet, dass** sie 2 bis 10 Gew.-% Flammruß mit einer Partikelgröße von 80 bis 120 nm enthalten.

7. EPS-Partikel nach einem der Ansprüche 1 bis 6, **dadurch gekennzeichnet, dass** sie eine Viskositätszahl im Bereich von 75 bis 100 ml/g aufweisen.

8. EPS-Partikel nach einem der Ansprüche 1 bis 7, **dadurch gekennzeichnet, daß** sie 0,6 bis 5 Gew.-%, bezogen auf das Polymere, einer organischen Bromverbindung mit einem Bromgehalt von ≥ 70 Gew.-% als Flammschutzmittel und 0,1 bis 1,0 Gew.-%, bezogen auf das Polymere, einer C-C- oder O-O-1a-bilen organischen Verbindung als Flammschutzsynergist enthalten.

9. Verfahren zur Herstellung von EPS-Partikel nach einem der Ansprüche 1 bis 8, **dadurch gekennzeichnet, daß** man Styrol, gegebenenfalls zusammen mit bis zu 20 % seines Gewichts an Comonomeren, in wäßriger Suspension in Gegenwart von 0,1 bis 25 Gew.-% Graphit- oder Ruß-Partikel und von 2,5 bis 8 Gew.-% Pentan, jeweils bezogen auf die Monomeren polymerisiert und die EPS-Partikel nach dem Waschen weniger als 1 sec lang einem Luftstrom von 50 bis 100°C aussetzt.

10. Verfahren zur Herstellung von Styropolymerisat-/Schaumpartikeln durch Verschäumen der EPS-Partikel nach einem der Ansprüche 1 bis 8, **dadurch gekennzeichnet, daß** man die EPS-Partikel in einem einzigen Schritt auf eine Schüttdichte unterhalb von 200 g/l und und in weiteren Schritten auf eine Schüttdichte unterhalb von 50 g/l verschäumt.

11. Verfahren nach Anspruch 10, **dadurch gekennzeichnet, daß** man im ersten Schritt auf eine Schüttdichte von weniger als 150 g/l und in einem oder mehreren Schritten auf eine Schüttdichte von 5 bis 35 g/l verschäumt.

12. Verwendung der nach Anspruch 10 hergestellten Schaumpartikel zur Herstellung von Schaumstoffen einer Dichte von 5 bis 35 g/l, die den Anforderungen der Wärmeleitklasse 035 nach DIN 18164, Teil 1, genügen.

## Claims

1. An expandable styrene polymer bead (EPS bead) with a bulk density above 600 g/l which comprises from 0.1 to 25% by weight of graphite particles or carbon black particles, and also comprises a volatile blowing agent, wherein the blowing agent is a mixture of
from 2.2 to 6% by weight of pentane and
from 1 to 10% by weight of water,
based in each case on the EPS beads.

2. The EPS bead according to claim 1, which has a bulk density above 650 g/l.

3. The EPS bead according to claim 1 or 2, which comprises
from 2.5 to 5.0% by weight of pentane and
from more than 3 to 8% by weight of water.

4. The EPS bead according to claim 1 or 2, which comprises
from 3.0 to 4.0% by weight of pentane and
from 3.5 to 6% by weight of water.

5. Thr EPS bead according to any one of claims 1 to 4, which comprises from 0.5 to 8% by weight of graphite with an average particle size of from 1 to 25 µm.

6. The EPS bead according to any one of claims 1 to 4, which comprises from 2 to 10% by weight of flame black with a particle size of from 80 to 120 nm.

7. The EPS bead according to any one of claims 1 to 6, whose viscosity number is in the range from 75 to 100 ml/g.

8. The EPS bead according to any one of claims 1 to 7, which comprises from 0.6 to 5% by weight, based on the polymer, of an organic bromine compound with a bromine content of ≥ 70% by weight as flame retardant, and from 0.1 to 1.0% by weight, based on the polymer, of a C-C-labile or O-O-labile organic compound as flame retardant synergist.

9. A process for producing EPS beads according to any one of claims 1 to 8, which comprises polymerizing styrene, if appropriate together with up to 20% by weight of comonomers, in aqueous suspension in the presence of 0.1 to 25% by weight of graphite particles or carbon black particles and from 2.5 to 8% by weight of pentane, based in each case on the monomers, followed, after washing, by exposure of the EPS beads to a stream of air at from 50 to 100°C for less than 1 sec.

10. A process for producing styrene polymer/foam beads by foaming the EPS beads according to any one of claims 1 to 8, which comprises foaming the EPS beads in a single step to a bulk density below 200 g/l and, in further steps, to a bulk density below 50 g/l.

11. The process according to claim 10, wherein foaming takes place in the first step to a bulk density of less than 150 g/l, and in one or more steps to a bulk density of from 5 to 35 g/l.

12. The use of the foam beads produced according to claim 10 for producing foams of density from 5 to 35 g/l which comply with the requirements of thermal conductivity class 035 (DIN 18164, Part 1).

## Revendications

1. Polymères de styrène expansibles en forme de particules (particules de EPS) ayant une masse volumique apparente supérieure à 600 g/l, qui contiennent 0,1 à 25 % en poids de particules de graphite ou de noir de fumée, ainsi qu'un agent gonflant volatil, **caractérisés en ce que** l'agent gonflant est un mélange
de 2,2 à 6 % en poids de pentane et
de 1 à 10 % en poids d'eau,
chaque fois par rapport aux particules de EPS.

2. Particules de EPS suivant la revendication 1, **caractérisées en ce qu'**elles présentent une masse volumique apparente supérieure à 650 g/l.

3. Particules de EPS suivant la revendication 1 ou 2, **caractérisées en ce qu'**elles contiennent
2,5 à 5,0 % en poids de pentane et
plus de 3 à 8 % en poids d'eau.

4. Particules de EPS suivant la revendication 1 ou 2, **caractérisées en ce qu'**elles contiennent
3,0 à 4,0 % en poids de pentane et
3,5 à 6 % en poids d'eau.

5. Particules de EPS suivant l'une des revendications 1 à 4, **caractérisées en ce qu'**elles contiennent 0,5 à 8 % en poids de graphite présentant une taille moyenne de particule de 1 à 25 µm.

6. Particules de EPS suivant l'une des revendications 1 à 4, **caractérisées en ce qu'**elles contiennent 2 à 10 % en poids de noir de fumée ayant une taille de particule de 80 à 120 nm.

7. Particules de EPS suivant l'une des revendications 1 à 6, **caractérisées en ce qu'**elles présentent un indice de viscosité de l'ordre de 75 à 100 ml/g.

8. Particules de EPS suivant l'une des revendications 1 à 7, **caractérisées en ce qu'**elles contiennent 0,6 à 5 % en poids, par rapport au polymère, d'un composé organique du brome ayant une teneur en brome ≥ 70 % en poids, comme agent ignifuge, et 0,1 à 1,0 % en poids, par rapport au polymère, d'un composé organique labile en C-C ou O-O, comme agent ignifuge synergique.

9. Procédé de préparation de particules de EPS suivant l'une des revendications 1 à 8, **caractérisé en ce qu'**on polymérise du styrène, éventuellement conjointement à jusqu'à 20 % de son poids en comonomères, en suspension aqueuse, en présence de 0,1 à 25 % en poids de particules de graphite ou de noir de fumée et de 2,5 à 8 % en poids de pentane, chaque fois par rapport aux monomères, et les particules de EPS sont, après le lavage, exposées pendant moins de 1 seconde à un courant d'air de 50 à 100°C.

10. Procédé de préparation de particules de polymère de styrène/mousse par moussage des particules de EPS suivant l'une des revendications 1 à 8, **caractérisé en ce qu'**on fait mousser les particules de EPS en une seule étape à une masse volumique apparente inférieure à 200 g/l et dans des étapes ultérieures à une masse volumique apparente inférieure à 50 g/l.

11. Procédé suivant la revendication 10, **caractérisé en ce que**, dans une première étape, on fait mousser à une masse volumique apparente inférieure à 150 g/l et, en une ou plusieurs étapes, à une masse volumique apparente de 5 à 35 g/l.

12. Utilisation des particules de mousse préparées suivant la revendication 10, pour la préparation de mousses d'une masse volumique apparente de 5 à 35 g/l, qui satisfont aux exigences de la classe de conductibilité thermique 035 selon la norme DIN 18164, partie 1.
